# EUROPÄISCHE PATENTSCHRIFT

(11) **EP 3 735 831 B1**
(45) Veröffentlichungstag und Bekanntmachung des Hinweises auf die Patenterteilung: **23.10.2024**
(21) Anmeldenummer: 19173507.5
(22) Anmeldetag: 09.05.2019
(51) Int. Cl.: A23C 9/00, A23C 9/142, A23C 9/152

(54) **HERSTELLUNG STABILISIERTER KONDENSMILCH**
PRODUCTION OF STABILIZED EVAPORATED MILK
FABRICATION DE LAIT CONDENSÉ STABILISÉ

(43) Veröffentlichungstag der Anmeldung: 11.11.2020
(73) Patentinhaber: DMK Deutsches Milchkontor GmbH, 27404 Zeven (DE)
(72) Erfinder: DÖRING, Sven-Rainer, 27404 Zeven (DE)
(74) Vertreter: Fabry, Bernd

(56) Entgegenhaltungen:
- EP-A1- 0 435 822
- EP-B1- 0 435 822
- US-A- 5 503 865
- US-A1- 2007 166 447
- DATABASE GNPD [online] MINTEL; 29 June 2016 (2016-06-29), ANONYMOUS: "Condensed Milk", XP055615349, retrieved from www.gnpd.com Database accession no. 4108967
- DATABASE GNPD [online] MINTEL; 2 June 2011 (2011-06-02), ANONYMOUS: "Condensed Milk", XP055615375, retrieved from www.gnpd.com Database accession no. 1559807
- DATABASE GNPD [online] MINTEL; 4 March 2005 (2005-03-04), ANONYMOUS: "Condensed Milk", XP055615384, retrieved from www.gnpd.com Database accession no. 10209824
- VAN DER HORST H C ET AL: "Use of nanofiltration for concentration and demineralization in the dairy industry: Model for mass transport", JOURNAL OF MEMBRANE SCIENCE, ELSEVIER BV, NL, vol. 104, no. 3, 31 August 1995 (1995-08-31), pages 205 - 218, XP004041309, ISSN: 0376-7388, DOI: 10.1016/0376-7388(95)00041-A
- DONALD J MCMAHON ET AL: "Food Structure Effects of Phosphate and Citrate on the Gelation Properties of Casein Micelles in Renneted Ultra- High Temperature (UHT) Sterilized Concentrated Milk Recommended Citation", MILOSLAV FOOD STRUCTURE, 1 January 1991 (1991-01-01), XP055615553, Retrieved from the Internet <URL:https://pdfs.semanticscholar.org/e272/923421cda9a2692d9d17b26b5d9bf38b8251.pdf?_ga=2.249225920.672396372.1566894864-1114392784.1560426277>
- MOSHE ROSENBERG: "Current and future applications for membrane processes in the dairy industry", TRENDS IN FOOD SCIENCE & TECHNOLOGY, vol. 6, no. 1, 1 January 1995 (1995-01-01), pages 12 - 19, XP055197852, ISSN: 0924-2244, DOI: 10.1016/S0924-2244(00)88912-8
- PAVAN KUMAR ET AL: "Perspective of Membrane Technology in Dairy Industry: A Review", ASIAN-AUSTRALASIAN JOURNAL OF ANIMAL SCIENCES., vol. 26, no. 9, 1 September 2013 (2013-09-01), KR, pages 1347 - 1358, XP055329545, ISSN: 1011-2367, DOI: 10.5713/ajas.2013.13082
- V.C. STEBNITZ ET AL: "The Age Thickening of Sweetened Condensed Milk", JOURNAL OF DAIRY SCIENCE., vol. 19, no. 2, 1 February 1936 (1936-02-01), US, pages 101 - 115, XP055615850, ISSN: 0022-0302, DOI: 10.3168/jds.S0022-0302(36)93042-4
- PUNEET SOLANKI ET AL: "Manufacture of low lactose concentrated ultrafiltered-diafiltered retentate from buffalo milk and skim milk", JOURNAL OF FOOD SCIENCE AND TECHNOLOGY, vol. 51, no. 2, 1 February 2014 (2014-02-01), India, pages 396 - 400, XP055615552, ISSN: 0022-1155, DOI: 10.1007/s13197-013-1142-4

## Beschreibung

### GEBIET DER ERFINDUNG

Die Erfindung befindet sich auf dem Gebiet der Milchindustrie und betrifft ein Verfahren zur Herstellung von Kondensmilch.

### TECHNOLOGISCHER HINTERGRUND

Kondensmilch oder evaporierte Kondensmilch, die man auch als Dosenmilch oder Büchsenmilch bezeichnet, wird aus Milch durch Reduktion des Wassergehaltes erhalten. Sie wurde ab der Mitte des 19. Jahrhunderts als Konserve hergestellt und vertrieben, da frische Milch nur kurze Zeit gelagert werden konnte. Das ursprüngliche Herstellungsverfahren beinhaltete die Zuführung von bis zu 45 % Zucker nach dem eigentlichen Kondensierungsvorgang, wodurch die sehr dickflüssige gezuckerte Kondensmilch entstand. 30 Jahre danach gelang die industrielle Herstellung ungezuckerter, ebenfalls haltbarer Kondensmilch, die bis heute vor allem als Zugabe in Filterkaffee beliebt ist.

In der Regel wir die Milch zur Keimabtötung und Albuminstabilisierung für 10 bis 25 Minuten auf 85 bis 100 °C erhitzt und anschließend bei Unterdruck und 40 bis 80 °C eingedickt, wobei rund 60 % des Wassers entzogen werden. Danach hat sie einen Fettgehalt von etwa 4 bis 10 % und eine fettfreie Trockenmasse von etwa 23 %. Nach der Homogenisierung wird sie in Dosen, Flaschen, Getränkekartons oder Plastikportionspackungen abgefüllt und zur Verlängerung der Haltbarkeit noch einmal sterilisiert.

Bei der gezuckerten Variante wird nach dem Wasserentzug bis zu einer Konzentration von 45 % Zucker hinzugegeben, was ursprünglich zur Verhinderung des Bakterienwachstums notwendig war.

Im Verlauf des Herstellungsverfahrens, beispielsweise nach der Homogenisierung, wir dem Produkt typischerweise ein Hydrokolloid und ein Puffer zugesetzt. Das Hydrokolloid erhöht die Viskosität; durch den Puffer wird Calcium absorbiert und Kalium freigesetzt, der pH-Wert leicht reduziert und konsequenterweise die Viskosität erhöht. Zusammenfassend lässt sich feststellen, dass die enthaltenen Proteine aufquellen und das enthaltene Calcium in Form von löslichen Calciumproteinkomplexen bindet. Von Nachteil ist jedoch, dass das Löslichkeitsprodukt dieser Komplexe leicht überschritten wird, worauf diese ausfallen und aufrahmen. Obwohl dieser Effekt an sich keinen Einfluss auf den Geschmack hat und die Aufrahmung durch Umrühren rasch wieder aufgelöst wird, assoziiert der Verbraucher doch damit eine minderwertige Produktqualität oder glaubt sogar, das Produkt sei verdorben.

### RELEVANTER STAND DER TECHNIK

Gegenstand der EP 0433474 B1 (NESTLE) ist ein Verfahren zur Herstellung einer stabilisierten Kondensmilch, bei dem man Vollmilch oder Magermilch ein Lactoseprodukt mit einem Gehalt an Phospholipiden zusetzt. Die so versetzte Milch wird wärmebehandelt, aufkonzentriert, homogenisiert und pasteurisiert. Die Stabilisierung betrifft jedoch nicht das Aufrahmen, außerdem ist der Zusatz dieser Additive in der Anwendung zu teuer, erhöht die Süße des Produktes erheblich und führt Laktose ein, wo dieser Stoff vielfach nicht erwünscht ist.

Aus der EP 0517941 B1 (NESTLE) ist ein weiteres Verfahren zur Herstellung von Kondensmilch bekannt. Dabei wird eine Standardmilch in zwei Ströme aufgeteilt, von denen jedoch nur einer homogenisiert wird. Anschließend wird dieser mit dem zweiten nicht homogenisierten Strom wie vermischt. Die Mischung wird anschließend wärmebehandelt, konzentriert, homogenisiert und abschließend sterilisiert.

Gegenstand der EP 627169 B1 (FRIESLAND) ist ein Verfahren zur Herstellung von Kondensmilch, bei dem man wiederum eine Standardmilch zunächst bei 50 bis 100° wärmebehandelt, dann homogenisiert und ein weiteres Mal erhitzt. Anschließend erfolgt da Eindampfen und Sterilisieren.

Das Dokument US 5 503 865 A (NESTEC SA) betrifft ein Verfahren zur Herstellung einer Milchzusammensetzung; das Verfahren zeichnet sich dadurch aus, dass man eine entrahmte Milch durch Ultrafiltration oder Mikrofiltration auf ein Drittel bis ein Sechstel des Volumens konzentriert und dass man im Retentat eine Lactosemenge löst, die, bezogen auf das Gewicht, ungefähr der Trockenmassemenge des Retentats entspricht.

Das Dokument US 2007/0166447 A1 (FAIRLIFE, LLC) betrifft ein Verfahren zur Herstellung von Milchprodukten aus fraktionierten Milchbestandteilen. Dabei wird ein durch Ultrafiltration gewonnenes Permeat einer Nanofiltration unterworfen.

Schließlich wird in der EP 1209980 B1 (NESTEC) beschrieben, wie man durch Zugabe von Molke zu Rohmilch über die genannten Zwischenschritte ebenfalls eine Kondensmilch erhält, die kostengünstiger in der Herstellung ist, aber keine geschmacklichen Defizite aufweist.

### AUFGBE DER ERFINDUNG

Die Aufgabe der vorliegenden Erfindung hat daher darin bestanden, ein Verfahren zur Herstellung einer Kondensmilch zur Verfügung zu stellen, welches frei von den oben geschilderten Nachteilen ist. Insbesondere sollte die Milch auch über längere Zeit und bei niedrigen Temperaturen lagerstabil und insbesondere frei von Aufrahmungen sein, ohne dass es durch entsprechende Maßnahmen zu einer geschmacklichen Beeinträchtigung der Produkte kommt.

### BESCHREIBUNG DER ERFINDUNG

Gegenstand der Erfindung ist ein Verfahren zur Herstellung von Kondensmilch bestehend aus den folgenden Schritten:
(a) Bereitstellung einer Rohmilch oder Vollmilch;
(b) Abtrennung des Rahms von der Vollmilch in an sich bekannter Weise unter Erhalt einer Magermilch- und einer Rahmfraktion;
(c) Nanofiltration der Magermilchfraktion aus Schritt (b) unter Erhalt eines mineralreichen Permeates P1 und eines teildemineralisierten und proteinreiches Retentates R1;
(d) Versetzen des Retentates R1 aus Schritt (c) mit wenigstens einem Teil der Rahmfraktion aus Schritt (b);
(e) Entwässern der Mischung aus Schritt (d) unter Erhalt eines Konzentrats;
(f) Versetzen des Konzentrates aus Schritt (e) mit Carrageen (E 407) und mindestens einem Puffer ausgewählt aus der Gruppe bestehend aus Carbonatpuffer (Carbonat/Bicarbonat) und Phosphatpuffer unter Erhalt einer Mischung, wobei Carrageen (E 407) und Puffer in Mengen von jeweils etwa 0,01 bis etwa 0,5 Gew.-% zusetzt werden;
(g) Homogenisierung der Mischung aus Schritt (f) unter Erhalt eines Homogenisats; und
(h) Pasteurisieren des Homogenisats aus Schritt (g).

Überraschenderweise wurde gefunden, dass durch Einfügen eines Nanofiltrationsschrittes und Abtrennung von Mineralien das Löslichkeitsprodukt der Calciumproteinkomplexe soweit verschoben werden kann, dass diese zuverlässig auch bei längerer Lagerung und sogar bei Temperaturen von 30 °C in Lösung bleiben. Die geschmackliche Qualität der Produkte bleibt dabei unverändert.

### SEPARATION

Unter Separation wird die Abtrennung des Rahms bis auf einen Fettanteil von etwa 0,05 Gew.-% in der Magermilch sowie die Entfernung von Feststoffen verstanden. Das Verfahren kann sowohl in der Wärme bei einer Temperatur im Bereich von etwa 20 bis etwa 60 °C oder in der Kälte bei einer Temperatur von etwa 8 bis etwa 18 °C durchgeführt werden.

Im erfindungsgemäßen Verfahren ist es von Vorteil, die Separation kalt durchzuführen. Dabei ist es vorteilhaft, wenn die Temperatur des kalten Zustandes der Rohmilch durch Wärmeaustausch mit einem Wärmeträgermedium auf einen für ihre Separation optimalen Wert eingestellt wird. Normalerweise steht die Rohmilch in einem gekühlten Zustand zur Verfügung, dessen Temperatur nicht dem Wert entspricht, bei dem ihre Kaltseparation am wirkungsvollsten und für das Milchfett (Rahm) am schonendsten betrieben werden kann. Deshalb wird sie durch den Wärmeaustausch auf den für ihre Separation optimalen Wert eingestellt. Die dabei anfallende Austauschkälte kann insbesondere durch eine sogenannte Wärmeschaukel anderen Prozessen, die innerhalb eines Molkereibetriebs ablaufen, zur Verfügung gestellt werden. Beispielsweise ist die Temperatur der gekühlten Rohmilch nicht höher als 6 °C, während die für die Kaltseparation optimale Temperatur im Bereich von 8 bis 18 °C und insbesondere 8 bis 12 °C liegt. In diesem Fall erfolgt der Wärmeaustausch durch Anwärmen der Rohmilch, damit die Temperatur ihres kalten Zustandes auf einen in diesem Bereich liegenden Wert angehoben wird. Normalerweise liegt in Molkereibetrieben ein Wärmeüberschuss vor. Deshalb kann als Wärmeträgermedium für das Anwärmen Niedrigtemperaturwasser, das in Prozessen des Molkereibetriebes anfällt, verwendet werden. Dieses Niedrigtemperaturwasser wird dem Wärmeaustauschprozess mit einer Temperatur, die beispielsweise im Bereich von 35 °C liegt, zugeführt und kühlt sich durch den Wärmeaustausch auf eine Temperatur, die beispielsweise im Bereich von 11 bis 15 °C liegt, ab. Dadurch stellt das erfindungsgemäße Verfahren eine wichtige Kältequelle für Prozesse des Molkereibetriebs zur Verfügung.

Wird die Separation in der Wärme durchgeführt, liegt die bevorzugte Temperatur im Bereich von etwa 45 bis etwa 60 °C, vorzugsweise im Bereich von etwa 50 bis 55 °C.

Die Abtrennung von Feststoffen sowie die Entrahmung des Fettanteils von etwa 4 Gew.-% erfolgen üblicherweise in einem nachgeschalteten Bauteil, vorzugsweise einem Separator. Derartige Bauteile sind aus dem Stand der Technik hinreichend bekannt. In der Milchindustrie sehr verbreitet sind Separatoren der Firma GEA Westfalia Separator GmbH, mit denen die Feststoffabtrennung einzeln oder gemeinsam durchgeführt werden können (http://www.westfalia-separator.com/de/anwendungen/molkereitechnik/milchmolke.html). Bevorzugte Kaltmilchseparatoren werden von diesem Hersteller unter der Bezeichnung "Procool" angeboten. Entsprechende Bauteile sind beispielsweise auch in der DE 10036085 C1 und der DE 10361526 B3 (Westfalia) beschrieben und dem Fachmann bestens bekannt, so dass es zur Durchführung dieser Verfahrensschritte keiner Erläuterungen bedarf, da sie dem allgemeinen Fachwissen zuzurechnen sind.

Vorzugsweise erfolgt die Abtrennung der Rahmfraktion in einem Plattenwärmeaustauscher mit angeschlossenem Separator vornimmt.

### NANOFILTRATION

Die Nanofiltration stellt ein Filtrationsverfahren aus dem Bereich der Membrantechnik dar, mit der sich makromolekulare Substanzen und kleine Partikel aus einem Medium abtrennen und aufkonzentrieren lassen. Man unterscheidet Mikrofiltration, Ultrafiltration und Nanofiltration über den Grad der Abtrennung. Liegt die Ausschlussgrenze (oder auch "*Cut-off*") bei 100 nm oder darüber, spricht man von Mikrofiltration. Liegt die Ausschlussgrenze in dem Bereich zwischen 2-100 nm, bezeichnet man dies als Ultrafiltration. Bei der Nanofiltration liegt die Ausschlussgrenze unterhalb von 2 nm. In jedem dieser Fälle handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 10 und 80 bar liegt.

Im Sinne der Erfindung wird ein Permeat P1 erhalten, welches mineralreich ist und vor allem Natrium- und Kaliumionen enthält. Das Retentat R1 ist mineralarm und proteinreich und wird im verfahren weiterverwendet.

Die Ausschlussgrenzen von Ultra- und Nanofiltrationsmembranen werden auch in Form des *NMWC* (englisch: Nominal Molecular Weight Cut-Off, auch *MWCO*, Molecular Weight Cut Off, Einheit: Dalton) angegeben. Er ist definiert als die minimale Molekülmasse globulärer Moleküle, welche durch die Membran zu 90% zurückgehalten werden. In der Praxis sollte der NMWC mindestens 20 % niedriger sein als die Molmasse des abzutrennenden Moleküls. Weitere qualitative Aussagen über die Filtration lassen sich anhand des *Flux* (Wasserwert) (Transmembranfluss oder Durchtrittsrate) machen. Dieser verhält sich im Idealfall proportional zum Transmembrandruck und reziprok zum Membranwiderstand. Diese Größen werden sowohl von den Eigenschaften der verwendeten Membran als auch durch Konzentrationspolarisation und eventuell auftretendes Fouling bestimmt. Die Durchtrittsrate wird auf 1 m² Membranfläche bezogen. Ihre Einheit ist l/(m²h bar).

Die Nanofiltration bevorzugt Porendurchmesser im Bereich von 100 bis 2.000 und vorzugsweise etwa 500 bis 1.000 Dalton.

Der Werkstoff der Filterfläche kann Edelstahl, Polymerwerkstoffen, Keramik, Aluminiumoxid oder textilen Gewebe darstellen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. Vorzugsweise werden jedoch Spiralwickelmembranen aus Polymerwerkstoffen oder Kerzenfilter aus Keramik oder Aluminiumoxid eingesetzt, wobei sich die zweite Ausführungsform für die Nanofiltration besonders bevorzugt erwiesen hat.

Die Nanofiltration kann im Sinne der vorliegenden Erfindung "heiß" oder "kalt", d.h. im Temperaturbereich von etwa 6 bis etwa 60 °C durchgeführt werden. Bevorzugt ist es jedoch, bei Temperaturen im niedrigen Bereich von etwa 6 bis etwa 20 °C zu arbeiten.

### STANDARDISIERUNG

Unter Standardisierung ist zu verstehen, dass dem Retentat R1 so viel von dem zuvor abgetrennten Rahm zugesetzt wird, wie dies aus anwendungstechnischer Sicht oder durch Normen vorgegeben erforderlich ist. Üblicherweise wird eine solche Menge zugesetzt, so dass das Endprodukt 2-12 Gew.-% fettfreie Trockenmasse und zwischen 3 und 5 Gew.-% und insbesondere etwa 4 Gew.-% Fett in der Trockenmasse aufweist.

### KONZENTRIERUNG

Die wie oben beschrieben erhaltene Standardmilch wird entwässert. Die Entwässerung erfolgt vorzugsweise in so genannten "Fallfilmverdampfern". Üblicherweise wird die Standardmilch so aufkonzentriert, dass etwa 15 bis etwa 25 Gew.-% und insbesondere etwa 18 Gew.-% fettfreie Trockenmasse vorliegen.

### ADDITIVIERUNG

Nach dem Eindampfen werden dem Konzentrat Additive zugegeben, die die Aufgabe haben, das enthaltene Calcium vor dem Ausflocken zu bewahren. Dazu nutzt man insbesondere Puffer, die Calcium absorbieren und Kalium freisetzen, den pH-Wert leicht reduzieren und konsequenterweise die Viskosität erhöhen; die Puffer lassen Proteine aufquellen und dann wasserlösliche Calciumproteinkomplexe bilden. Ferner werden Hydrokolloide zugegeben, die für eine Erhöhung der Viskosität beitragen.

Als Hydrokolloide, die natürlich für den Verzehr zugelassen sind, kommt Carrageen (E 407) in Frage.

Als Puffer kommen Carbonatpuffer (Carbonat/Bicarbonat) und Phosphatpuffer in Frage. Insbesondere bevorzugt im Sinne der vorliegenden Erfindung ist Phosphatpuffer.

Der Einsatz von Hydrokolloiden, speziell Carrageen, und Puffern ist gemeinsam, wobei deren Einsatzmenge jeweils etwa 0,01 bis etwa 0,5 Gew.-%, vorzugsweise etwa 0,02 bis etwa 0,3 Gew.-% und insbesondere etwa 0,05 bis etwa 0,1 Gew.-% - jeweils bezogen auf das Konzentrat - betragen kann.

### HOMOGENISIERUNG UND PASTEURISIERUNG

Die Homogenisierung der Zwischenprodukte kann in an sich bekannter Weise in Rührkesseln erfolgen. Die Homogenisierzeit beträgt zwischen 1 und 30 Minuten.

Anschließend werden die Homogenisate einer Kurzzeit-Hochtemperaturbehandlung unterworfen und dabei pasteurisiert. Typisch sind Bedingungen von etwa 1 bis etwa 7 Minuten bei 120 bis 125 °C. Bevorzugt ist eine Erhitzung über 3-6 Minuten auf 121 °C.

Die Ultrahocherhitzung kann beispielsweise durch Direct Steam Injection (DSI) erfolgen. Dies hat den Vorteil, dass das langsame Durchlaufen eines Temperaturbereiches, in dem mesophile und thermophile Sporen optimale Wachstumsbedingungen vorfinden, durch eine blitzartige Erwärmung signifikant verkürzt wird. Dies wird durch die direkte Einspritzung von heißem oder sogar überhitztem Wasserdampf erreicht, der eine Temperatur von 100 bis etwa 250 °C aufweisen kann. Üblicherweise erfolgt dies mit Hilfe von Düsen, die entweder direkt in das Produkt eintauchen oder in einer Ableitung des Wärmeaustauschers eingebaut sind.

Das Prinzip von DSI besteht darin, dass ein unter Druck stehender hocherhitzter Wasserdampfstrahl in eine Düsenkammer geleitet wird und sich dann durch ein perforiertes Rohr ("Radial Steam Jet Diffuser") in das zu erhitzende flüssige Produkt entspannt. Der Hochdruckstrom erzeugt ein sich mit hoher Geschwindigkeit ausbreitendes radiales Wärmeaustauschfeld, wodurch eine gleichmäßige Erhitzung des Produktes in sehr kurzen Zeiten erreicht wird.

Alternativ kann man das Produkt auch durch (Dampf-)Infusion pasteurisiert. Dieses Verfahren ist seit den 1960er Jahren bekannt. Grundsätzlich kann die Erwärmung in zwei Schritten durchgeführt werden, wobei das zu erhitzende Gut in eine mit Heißdampf gefüllte Druckkammer eingedüst wird und die Erwärmung bzw. Pasteurisierung auf dem Fallweg der Tröpfchen erfolgt. Seit dem Jahr 2000 hat indes der so genannte PDX-Prozess an Bedeutung gewonnen. Dabei wird das zu erwärmende Gut vaporisiert und in einem Strom überhitzten Wasserdampfs schlagartig erwärmt. Der sich mit Überschallgeschwindigkeit vorwärtsbewegende Dampfstrom verteilt die Produkttröpfchen homogen, so dass ein Mehrphasenstrom entsteht, wobei die Erhitzung schonend nur an den Grenzflächen der Tröpfchen stattfindet. Auf diese Weise gleichzeitig wird eine Kondensation der Tröpfchen bewirkt. Der Wasserdampf kann dabei eine Temperatur von etwa 100 bis etwa 250 °C und insbesondere etwa 120 bis etwa 150 °C aufweisen, die Infusion benötigt eine Zeit von typisch 1 bis 5 und insbesondere etwa 2 bis 3 Sekunden.

Nach der Pasteurisierung wird die so erhaltene Kondensmilch steril abgefüllt. Falls gewünscht können die Verpackungen dann ein weiteres Mal erhitzt werden, um die Lagerzeit zu verlängern. Grundsätzlich ist es auch möglich, die Pasteurisierung selbst erst mit der verpackten Ware vorzunehmen, was insbesondere dann möglich ist, wenn es sich bei den Verpackungen um Glasflaschen oder Konserven handelt.

Schließlich kann das gesamte Verfahren batchweise oder kontinuierlich betrieben werden. Ebenfalls ist es möglich, die Verfahrensweisen zu mischen, also beispielsweise die Schritte (a) bis (d) batchweise zu gestalten und die Schritte (e) bis (h) dann kontinuierlich zu gestalten.

### BEISPIELE

### VERGLEICHSBEISPIEL 1

### Herstellung von Kondensmilch ohne Nanofiltration

5.000 l Rohmilch wurden bei 55 °C kontinuierlich über eine Kombination aus Plattenwärmeaustauscher und Separator geleitet und dabei entstaubt und entrahmt. Die resultierende Magermilch wurde unter Zugabe eines Teils des zuvor abgetrennten Rahms auf einen Fettgehalt von 2 Gew.-% in der Trockenmasse eingestellt. Die so standardisierte Milch wurde in einen Fallfilmverdampfer entwässert, bis ein Gehalt von 18 Gew.-% fettfreie Trockenmasse und 4 Gew.-% Fett erreicht war. Danach wurde dem Konzentrat 0,5 kg einer 10 Gew-% wässrigen Carrageenlösung und 1,5 kg einer wässrigen Phosphatpufferlösung zugegeben, so dass sich ein pH-Wert von etwa 6,4 einstellte. Anschließend wurde die Mischung 30 Minuten in einem Rührkessel homogenisiert und dann einer Kurzzeiterhitzung (3 Minuten, 121 °C) unterworfen, bevor das so pasteurisierte Produkt unter sterilen Bedingungen in Glasflaschen abgefüllt wurde.

### BEISPIEL 1

5.000 l Rohmilch wurden bei 55 °C kontinuierlich über eine Kombination aus Plattenwärmeaustauscher und Separator geleitet und dabei entstaubt und entrahmt. Die resultierende Magermilch wurde bei 20 °C einer Nanofiltration unter Einsatz einer Keramikmembran mit einer mittleren Porenweite von 1.000 Dalton unterworfen. Das mineralreiche Permeat wurde abgeführt und das teildemineralisierte und proteinreiche Retentat unter Zugabe eines Teils des zuvor abgetrennten Rahms auf einen Fettgehalt von 4 Gew-% in der Trockenmasse eingestellt. Die so standardisierte Milch wurde in einen Fallfilmverdampfer entwässert, bis ein Gehalt von 18 Gew.-% fettfreie Trockenmasse und 4 Gew.-% Fett erreicht war. Danach wurde dem Konzentrat 0,5 kg einer 10 Gew-% wässrigen Carrageenlösung und 1,5 kg einer wässrigen Phosphatpufferlösung zugegeben, so dass sich ein pH-Wert von etwa 6,4 einstellte. Anschließend wurde die Mischung 30 Minuten in einem Rührkessel homogenisiert und dann einer Kurzzeiterhitzung (3 Minuten, 121 °C) unterworfen, bevor das so pasteurisierte Produkt unter sterilen Bedingungen in Glasflaschen abgefüllt wurde.

### ANWENDUNGSTECHNISCHE BEURTEILUNG

Beide Muster wurden einem sogenannten Stresstest unterworfen, bei dem die Produkte unter drastischen Bedingungen gelagert wurden, um die Effizienz des erfindungsgemäßen Verfahrens und der erfindungsgemäßen Produkte deutlich zu demonstrieren. Demzufolge wurden beide Muster 8 Wochen bei 30°C gelagert und anschließend bezüglich des optischen Eindrucks und des Geschmacks von 5 geschulten Testern beurteilt. Die Mittelwerte der Beurteilungen sind in **Tabelle 1** zusammengefasst. Dabei bedeutet von 1 nach 5 aufsteigend ein Zunehmen der Aufrahmung bzw. von einer zunehmenden Übereinstimmung mit dem Geschmack von Magermilch.

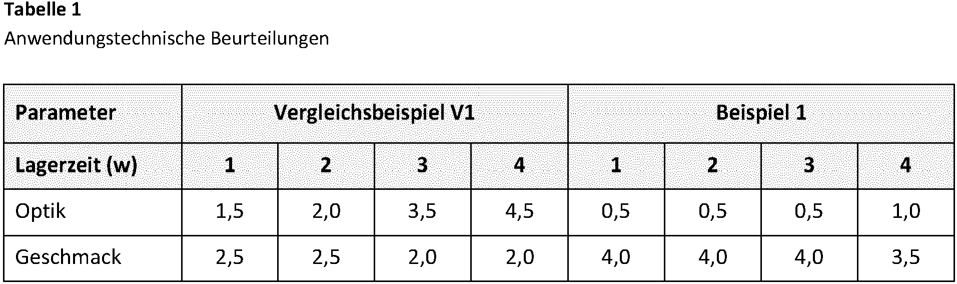

Die Befunde zeigen, dass das Vergleichsprodukt schon nach kurzer Zeit aufrahmt und seinen Milchgeschmack verliert, während das erfindungsgemäße Produkt über die gesamte Lagerzeit praktisch unverändert bleibt und dabei einen deutlicheren und stabileren Milchgeschmack besitzt.

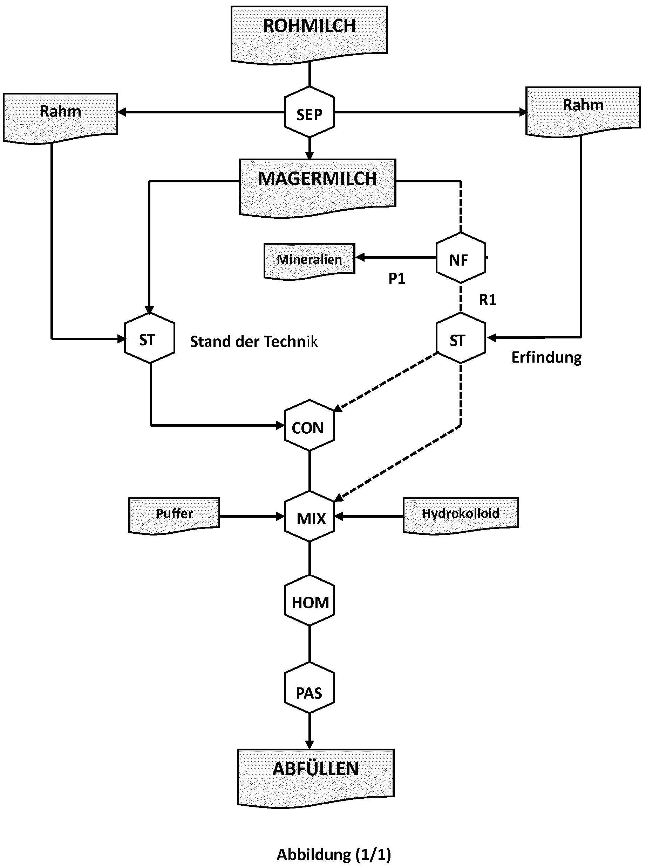

Die Erfindung wird an Hand des Schemas in der **Abbildung 1** noch einmal verdeutlich; der linke Ast zeigt den Stand der Technik, der rechte das erfindungsgemäße Verfahren. Die Abkürzungen bedeuten:
- SEP :: Separation
- NF :: Nanofiltration
- ST :: Standardisierung
- CON :: Konzentration
- MIX :: Vermischung
- HOM :: Homogenisierung
- PAS :: Pasteurisierung

## Patentansprüche

1. Verfahren zur Herstellung von Kondensmilch bestehend aus den folgenden Schritten:
(a) Bereitstellung einer Rohmilch oder Vollmilch;
(b) Abtrennung des Rahms von der Vollmilch in an sich bekannter Weise unter Erhalt einer Magermilch- und einer Rahmfraktion;
(c) Nanofiltration der Magermilchfraktion aus Schritt (b) unter Erhalt eines mineralreichen Permeates P1 und eines teildemineralisierten und proteinreiches Retentates R1;
(d) Versetzen des Retentates R1 aus Schritt (c) mit wenigstens einem Teil der Rahmfraktion aus Schritt (b);
(e) Entwässern der Mischung aus Schritt (d) unter Erhalt eines Konzentrats;
(f) Versetzen des Konzentrates aus Schritt (e) mit Carrageen (E 407) und mindestens einem Puffer ausgewählt aus der Gruppe bestehend aus Carbonatpuffer (Carbonat/Bicarbonat) und Phosphatpuffer unter Erhalt einer Mischung, wobei Carrageen (E 407) und Puffer in Mengen von jeweils etwa 0,01 bis etwa 0,5 Gew.-% zusetzt werden;
(g) Homogenisierung der Mischung aus Schritt (f) unter Erhalt eines Homogenisats; und
(h) Pasteurisieren des Homogenisats aus Schritt (g).

2. Verfahren nach Anspruch 1, **dadurch gekennzeichnet, dass** man die Abtrennung der Rahmfraktion in einem Plattenwärmeaustauscher mit angeschlossenem Separator vornimmt.

3. Verfahren nach den Ansprüchen 1 und/oder 2, **dadurch gekennzeichnet, dass** man die Nanofiltration mit Membranen durchführt, die einen mittleren Porendurchmesser von etwa 100 bis etwa 2.000 Dalton aufweisen.

4. Verfahren nach mindestens einem der Ansprüche 1 bis 3, **dadurch gekennzeichnet, dass** man die Nanofiltration mit Membranen durchführt, die einen mittleren Porendurchmesser von etwa 500 bis etwa 1.000 Dalton aufweisen.

5. Verfahren nach mindestens einem der Ansprüche 1 bis 4, **dadurch gekennzeichnet, dass** man die Nanofiltration bei einer Temperatur im Bereich von etwa 6 bis etwa 60 °C durchführt.

6. Verfahren nach mindestens einem der Ansprüche 1 bis 5, **dadurch gekennzeichnet, dass** man dem Retentat R1 eine solche Menge Rahm zusetzt, dass das Endprodukt 2-12 Gew.-% fettfreie Trockenmasse und zwischen 3 und 5 Gew.-% und insbesondere etwa 4 Gew.-% Fett in der Trockenmasse aufweist.

7. Verfahren nach mindestens einem der Ansprüche 1 bis 6, **dadurch gekennzeichnet, dass** man das Produkt aufkonzentriert, so dass etwa 15 bis etwa 25 Gew.-% fettfreie Trockenmasse vorliegen.

8. Verfahren nach mindestens einem der Ansprüche 1 bis 7, **dadurch gekennzeichnet, dass** man den Homogenisaten einen Phosphatpuffer zusetzt.

9. Verfahren nach mindestens einem der Ansprüche 1 bis 8, **dadurch gekennzeichnet, dass** man die Homogenisate über einen Zeitraum von etwa 1 bis etwa 7 Minuten auf 120 bis 125 °C erhitzt und dabei pasteurisiert.

10. Verfahren nach mindestens einem der Ansprüche 1 bis 9, **dadurch gekennzeichnet, dass** man die Kondensmilch nach der Pasteurisierung steril abfüllt und die verpackte Ware gegebenenfalls ein weiteres Mal erhitzt.

11. Verfahren nach mindestens einem der Ansprüche 1 bis 10, **dadurch gekennzeichnet, dass** man es batchweise oder ganz oder teilweise kontinuierlich betreibt.

## Claims

1. A process for the preparation of condensed milk consisting of the following steps:
(a) providing a raw milk or whole milk;
(b) separating the cream from the whole milk in a manner known per se to obtain a skimmed milk fraction and a cream fraction;
(c) nanofiltration of the skim milk fraction from step (b) to obtain a permeate P1 rich in minerals and a partially demineralized and retentate R1 rich in proteins;
(d) adding at least part of the cream fraction from step (b) to the retentate R1 from step (c);
(e) dewatering the mixture from step (d) to obtain a concentrate;
(f) adding carrageenan (E 407) and at least one buffer selected from the group consisting of carbonate buffer (carbonate/bicarbonate) and phosphate buffer to the concentrate from step (e) to obtain a mixture, wherein carrageenan (E 407) and buffer are each added in amounts of about 0.01 to about 0.5% by weight;
(g) homogenizing the mixture from step (f) to obtain a homogenate; and
(h) pasteurizing the homogenate from step (g).

2. The process according to claim 1, **characterized in that** the separation of the cream fraction is carried out in a plate heat exchanger with a connected separator.

3. The Process according to claims 1 and/or 2, **characterized in that** the nanofiltration is carried out with membranes which have an average pore diameter of about 100 to about 2,000 Daltons.

4. The process according to at least one of claims 1 to 3, **characterized in that** the nanofiltration is carried out with membranes which have an average pore diameter of about 500 to about 1,000 Daltons.

5. The process according to at least one of claims 1 to 4, **characterized in that** the nanofiltration is carried out at a temperature in the range from about 6 to about 60 °C.

6. The process according to at least one of claims 1 to 5, **characterized in that** an amount of cream is added to the retentate R1 such that the final product has 2-12% by weight of fat-free dry matter and between 3 and 5% by weight and in particular about 4% by weight of fat in the dry matter.

7. The process according to at least one of claims 1 to 6, **characterized in that** the product is concentrated so that about 15 to about 25% by weight of fat-free dry matter is present.

8. The process according to at least one of claims 1 to 7, **characterized in that** a phosphate buffer is added to the homogenates.

9. The process according to at least one of claims 1 to 8, **characterized in that** the homogenizates are heated to 120 to 125°C for a period of about 1 to about 7 minutes and pasteurized in the process.

10. The process according to at least one of claims 1 to 9, **characterized in that** the condensed milk is sterilely filled after pasteurization and the packaged product is heated a further time if necessary.

11. The process according to at least one of claims 1 to 10, **characterized in that** it is operated batchwise or continuously in whole or in part.

## Revendications

1. Procédé de préparation de lait concentré comprenant les étapes suivantes :
(a) fournir un lait cru ou un lait entier ;
(b) séparation de la crème du lait entier d'une manière connue en soi pour obtenir une fraction de lait écrémé et une fraction de crème ;
(c) nanofiltration de la fraction de lait écrémé de l'étape (b) pour obtenir un perméat P1 riche en minéraux et un rétentat R1 partiellement minéralisé et riche en protéines ;
(d) ajouter d'au moins une partie de la fraction de crème de l'étape (b) au rétentat R1 de l'étape (c) ;
(e) déshydratation du mélange de l'étape (d) pour obtenir un concentré ;
(f) ajouter de carraghénane (E 407) et d'au moins un tampon choisi dans le groupe constitué par le tampon carbonate (carbonate/bicarbonate) et le tampon phosphate au concentré de l'étape (e) pour obtenir un mélange, dans lequel le carraghénane (E 407) et le tampon sont chacun ajoutés en quantités d'environ 0,01 à environ 0,5 % en poids ;
(g) homogénéiser le mélange de l'étape (f) pour obtenir un homogénat ; et
(h) pasteurisation de l'homogénat obtenu à l'étape g).

2. Le procédé selon la revendication 1, **caractérisé par le fait que** la séparation de la fraction de crème est effectuée dans un échangeur de chaleur à plaques avec un séparateur connecté.

3. Le procédé selon les revendications 1 et/ou 2, **caractérisé par le fait que** la nanofiltration est effectuée avec des membranes dont le diamètre moyen des pores est compris entre 100 et 2 000 daltons environ.

4. Le procédé selon l'une au moins des revendications 1 à 3, **caractérisé par le fait que** la nanofiltration est effectuée avec des membranes dont le diamètre moyen des pores est compris entre 500 et 1 000 daltons environ.

5. Le procédé selon l'une au moins des revendications 1 à 4, **caractérisé par le fait que** la nanofiltration est effectuée à une température comprise entre 6 et 60 °C environ.

6. Le procédé selon l'une au moins des revendications 1 à 5, **caractérisé en ce qu'**une quantité de crème est ajoutée au rétentat R1 de sorte que le produit final ait 2-12% en poids de matière sèche dégraissée et entre 3 et 5% en poids et en particulier environ 4% en poids de matière grasse dans la matière sèche.

7. Le procédé selon l'une au moins des revendications 1 à 6, **caractérisé par le fait que** le produit est concentré de manière à ce qu'il contienne entre 15 et 25 % en poids de matière sèche dégraissée.

8. Le procédé selon l'une au moins des revendications 1 à 7, **caractérisé par** l'ajout d'un tampon phosphate aux homogénats.

9. Le procédé selon l'une au moins des revendications 1 à 8, **caractérisé par le fait que** les homogénats sont chauffés à une température de 120 à 125°C pendant une période d'environ 1 à 7 minutes et pasteurisés au cours du procédé.

10. Le procédé selon l'une au moins des revendications 1 à 9, **caractérisé par le fait que** le lait concentré est rempli de manière stérile après la pasteurisation et que le produit emballé est chauffé une nouvelle fois si nécessaire.

11. Le procédé selon l'une au moins des revendications 1 à 10, **caractérisé par le fait qu'**il fonctionne par lots ou en continu, en totalité ou en partie.
